# EUROPEAN PATENT APPLICATION

(11) **EP 2 770 795 A1**
(43) Date of publication of application: **27.08.2014**
(21) Application number: 12846317.1
(22) Date of filing: 05.11.2012
(51) Int. Cl.: H04W 76/02

(54) **METHOD, APPARATUS AND SYSTEM FOR ESTABLISHING DEVICE-TO-DEVICE CONNECTION**

(30) Priority: 03.11.2011 CN 201110343986
(71) Applicant: Huawei Technologies Co., Ltd., Shenzhen, Guangdong 518129 (CN)
(72) Inventor: ZHOU, Weihua, Shenzhen Guangdong 518129 (CN); WU, Xiaobo, Shenzhen Guangdong 518129 (CN); MERIAU, Laurence, Shenzhen Guangdong 518129 (CN)
(74) Representative: Epping - Hermann - Fischer
(86) International application number: PCT/CN2012/084078
(87) International publication number: WO 2013/064116

(57) **Abstract**

The present invention discloses a method, an apparatus, and a system for establishing a device-to-device connection, and relates to the field of communications technologies. The method includes: obtaining, by a device-to-device D2D server, registration information of a first device needing to perform D2D communication; performing pre-matching for the first device according to the registration information of the first device to find a second device; and triggering an evolved Node Base eNB to establish a D2D communication link between the first device and the second device. In the present invention, a D2D server triggers an eNB to establish a direct device-to-device connection between two devices, so that establishment and usage of the connection between the two devices can be controlled by a network. In this way, a carrier can implement control, management, charging, and the like of D2D, and it is ensured that interference of D2D on a common UE is under control.

## Description

### CROSS-REFERENCE TO RELATED APPLICATION

This application claims priority to Chinese Patent Application No. 201110343986.9, filed with the Chinese Patent Office on November 03, 2011 and entitled "METHOD, APPARATUS, AND SYSTEM FOR ESTABLISHING DEVICE-TO-DEVICE CONNECTION", which is incorporated herein by reference in its entirety.

### TECHNICAL FIELD

The present invention relates to the field of communications technologies, and in particular, to a method, an apparatus, and a system for establishing a device-to-device connection.

### BACKGROUND

A D2D (Device-to-Device, device-to-device) technology enables data to be directly transmitted and exchanged between two devices. Currently, there are multiple technologies that may support D2D communication, for example, Bluetooth, an ultra-broadband technology (UWB), an IEEE802.11-based wireless local area network technology.

A method for performing D2D communication by using a wireless network is mainly as follows: One device in D2D broadcasts a character string, so that the other device in D2D conveniently knows an identity feature, an application service, and broadcast content of the one device. After a user of the other device in D2D receives the character string broadcast by the one device in D2D, if the character string matches an interest of the user and the user wants to obtain more detailed information, the user sends "paging" signaling to the one device in D2D. After receiving the "paging" signaling, the one device in D2D directly establishes a connection with the other device in D2D. After a communication link between the two devices is successfully established, data may be transmitted.

D2D devices have a function of perceiving a wireless communication resource, that is, automatically sensing an external environment, and automatically performing resource management and configuration, establishment and management of a D2D link between the devices, and the like, according to a perception result, without a need for network control and allocation. However, network congestion may affect data transmission.

### SUMMARY

The present invention provides a method, an apparatus, and a system for establishing a device-to-device connection, which are capable of effectively performing network control and resource management on D2D communication.

According to an aspect, a method for establishing a device-to-device D2D connection is provided, where the method includes:
obtaining, by a device-to-device D2D server, registration information of a first device needing to perform D2D communication;
performing pre-matching, by the D2D server, for the first device according to the registration information of the first device to find a second device, where the first device and the second device are two devices in D2D communication; and
triggering, by the D2D server, an evolved Node Base eNB to establish a D2D communication link between the first device and the second device.

According to an aspect, a method for establishing a device-to-device D2D connection is provided, where the method includes:
receiving, by an evolved Node Base eNB, a Bearer Setup Request or Bearer Modify Request message sent by an MME (Mobility management entity, mobility management entity) triggered by a device-to-device D2D server, where the Bearer Setup Request or Bearer Modify Request message includes an identity of a first device and an identity of a second device, the Bearer Setup Request or Bearer Modify Request message indicates that the first device and the second device to bear a service flow between the first device and the second device by will use a D2D communication link, and the first device and the second device are two devices in D2D communication; and
binding, by the eNB, the first device and the second device according to the identity of the first device and the identity of the second device, and establishing the D2D communication link between the first device and the second device.

According to an aspect, a method for establishing a device-to-device D2D connection is provided, where the method includes:
sending, by a first device in D2D communication, registration information to a D2D server, so that the D2D server performs pre-matching for the first device according to the registration information to find a second device in D2D communication, and triggers an evolved Node Base eNB to establish a D2D communication link between the first device and the second device; and
receiving, by the first device, a D2D bearer setup and configuration message sent by the eNB, performing D2D bearer configuration according to the D2D bearer setup and configuration message, and returning a response message to the eNB to acknowledge that the D2D communication link is successfully established.

According to another aspect, a device-to-device D2D server is provided, where the server includes:
an obtaining module, configured to obtain registration information of a first device needing to perform D2D communication;
a pre-matching module, configured to perform pre-matching for the first device, according to the registration information of the first device obtained by the obtaining module, to find a second device, where the first device and the second device are two devices in D2D communication; and
a triggering module, configured to trigger, after the pre-matching module finds the second device, an eNB (evolved Node Base, evolved Node Base) to establish a D2D communication link between the first device and the second device.

According to another aspect, an evolved Node Base eNB is provided, where the base station includes:
a transmission module, configured to receive a Bearer Setup Request or Bearer Modify Request message sent by a mobility management entity MME triggered by a device-to-device D2D server, where the Bearer Setup Request or Bearer Modify Request message includes an identity of a first device and an identity of a second device, the Bearer Setup Request or Bearer Modify Request message instructs the first device and the second device to bear a service flow between the first device and the second device by using a D2D communication link, and the first device and the second device are two devices in D2D communication; and
a processing module, configured to bind the first device and the second device according to the identity of the first device and the identity of the second device, and establish the D2D communication link between the first device and the second device.

According to another aspect, a first device in D2D is further provided, where the device includes:
a transmission module, configured to send registration information to a D2D server, so that the D2D server performs pre-matching for the first device according to the registration information to find a second device in D2D communication, and triggers an evolved Node Base eNB to establish a D2D communication link between the first device and the second device; and
a learning module, configured to receive a D2D bearer setup and configuration message sent by the eNB, perform D2D bearer configuration according to the D2D bearer setup and configuration message, and return a response message to the eNB to acknowledge that the D2D communication link is successfully established.

According to another aspect, a system for establishing a device-to-device D2D connection is further provided, where the system includes: the foregoing D2D server, the foregoing evolved Node Base eNB, and the foregoing first device and second device in the D2D.

Embodiments of the present invention provide a method for establishing a device-to-device D2D connection, where a D2D server obtains registration information of a first device needing to perform D2D communication, the D2D server performs pre-matching for the first device according to the registration information of the first device to find a second device, and the D2D server triggers an eNB to establish a D2D communication link between the first device and the second device, so that a D2D connection can be established between the two devices. In this way, a network is under control, and a carrier can effectively perform a function such as control, management, or charging on D2D communication; in addition, compared with the prior art, after the D2D connection is established, interference on a UE due to D2D communication can be further eliminated because the network can be effectively controlled.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for establishing a D2D connection according to an embodiment of the present invention;
FIG. 2 is a flowchart of a method for establishing a D2D connection according to an embodiment of the present invention;
FIG. 3 is a flowchart of a method for establishing a D2D connection according to an embodiment of the present invention;
FIG. 4 is a schematic diagram of network architecture according to an embodiment of the present invention;
FIG. 5 is a flowchart of another method for establishing a D2D connection according to an embodiment of the present invention;
FIG. 6 is a flowchart of another message for establishing a D2D connection according to an embodiment of the present invention;
FIG. 7 is a schematic diagram of another D2D server according to an embodiment of the present invention;
FIG. 8 is a schematic diagram of another D2D server according to an embodiment of the present invention;
FIG. 9 is a schematic diagram of an evolved Node Base according to an embodiment of the present invention;
FIG. 10 is a schematic diagram of a first device in D2D according to an embodiment of the present invention;
FIG. 11 is a schematic diagram of another first device in D2D according to an embodiment of the present invention; and
FIG. 12 is a schematic diagram of a system for establishing a D2D connection according to an embodiment of the present invention.

### DESCRIPTION OF EMBODIMENTS

To make the objectives, technical solutions, and advantages of the present invention more clearly, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In an existing network, there are a first device, a second device, a third device, and a base station, where the first device and the second device independently establish a connection and independently manage and configure a perceived wireless resource, so that the network does not need to control or allocate the wireless resource. There is no authentication and certification by an operation network, nos reasonable resource allocation, or no mechanism such as interference control, so that when congestion occurs in the network, data transmission may be affected. For example, when data is transmitted between the first device and the second device, interference is caused by communication between the base station and the first device, or communication between the base station and the second device, or communication between the base station and the third device, or communication between the first device and the third device, so that communication quality of the network is affected.

To solve the foregoing problem, the present invention provides the following technical solutions:

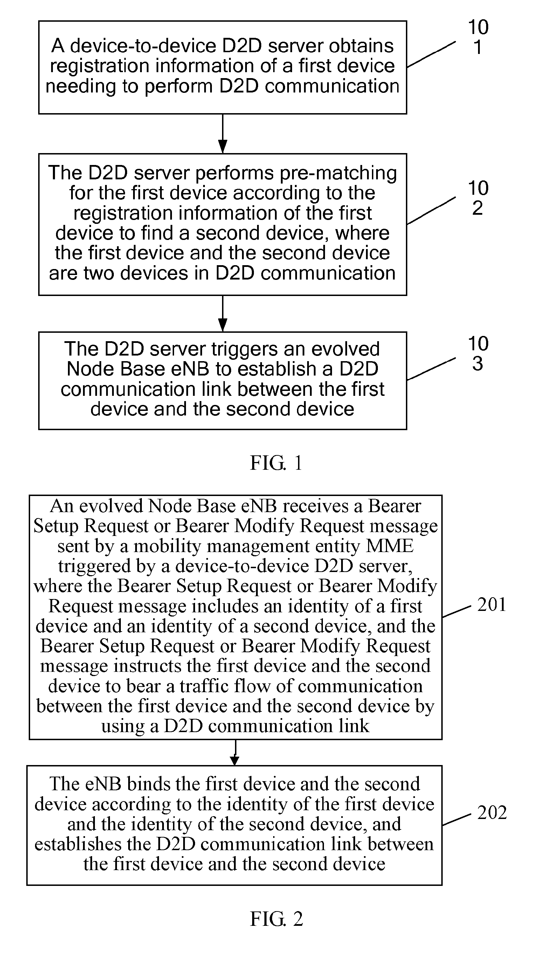

Referring to FIG. 1, FIG. 1 is a flowchart of a method for establishing a D2D connection according to an embodiment of the present invention, which includes:
101: A device-to-device D2D server obtains registration information of a first device needing to perform D2D communication.
102: The D2D server performs pre-matching for the first device according to the registration information of the first device to find a second device, where the first device and the second device are two devices in D2D communication.
103: The D2D server triggers an evolved Node Base eNB to establish a D2D communication link between the first device and the second device.

The method in this embodiment further includes:
receiving, by the D2D server, registration information of a device needing to perform D2D communication, where the registration information of the device includes a D2D identity of the device, an application identity, and location information of the device.

In this embodiment, optionally, if the registration information of the first device further includes application-related information of the first device, the performing pre-matching for the first device according to the registration information of the first device to find a second device includes:
obtaining registration information of a pre-storing device according to the location information of the first device, where a distance between the pre-storing device and the first device is within a preset range; and
if application-related information stored in the pre-storing device for one device is consistent with the application-related information of the first device, determining that the one device in the pre-storing device is the pre-matched second device.

Further, in this embodiment, if the registration information of the first device obtained by the device-to-device D2D server further includes an identity of the second device, the performing pre-matching for the first device according to the registration information of the first device to find a second device includes:
performing pre-matching for the first device according to the identity of the second device to find the second device.

Optionally, in this embodiment, after the performing pre-matching for the first device according to the registration information of the first device to find a second device, the method further includes:
sending, by the D2D server, registration information of the second device to the first device, so that the first device pre-detects the second device according to the registration information of the second device; and
receiving, by the D2D server, a pre-detection success result of the first device, and determining, according to the pre-detection result, whether the second device is capable of communicating with the first device.

Further, optionally, if the D2D server receives the pre-detection success result of the first device, after determining that the second device is capable of communicating with the first device, the method further includes:
sending, by the D2D server, registration information of the first device to the second device, so that the second device pre-detects the first device according to the registration information of the first device; and
receiving, by the D2D server, a pre-detection result of the second device, and determining whether the first device is capable of communicating with the second device.

In this embodiment, the triggering, by the D2D server, an evolved Node Base eNB to establish a D2D communication link between the first device and the second device includes:
separately sending, by the D2D server, a Policy and Charging Control message to a PCRF (Policy and charging control function, policy and charging control function entity) that the first device belongs to and a PCRF that the second device belongs to, where the Policy and Charging Control message includes an identity of the first device and the identity of the second device, so as to trigger the eNB, through a PGW (Public Data Network Gateway, public data network gateway), an SGW (Serving Gateway, serving gateway), and an MME that the first device belongs to and a PGW, an SGW, and an MME that the second device belongs to, to bind the first device and the second device according to the identity of the first device and the identity of the second device, and establish the D2D communication link between the first device and the second device.

Further, optionally, after the triggering an eNB to establish a D2D communication link between the first device and the second device, the method further includes:
receiving, by the D2D server, a D2D communication link establishment success result returned by the eNB, and separately returning an application layer communication indication to the first device and the second device.

A beneficial effect of the method embodiment provided by the present invention is that: a D2D server obtains registration information of a first device needing to perform D2D communication, the D2D server performs pre-matching for the first device according to the registration information of the first device to find a second device, and the D2D server triggers an eNB to establish a D2D communication link between the first device and the second device, so that a D2D connection can be established between the two devices. In this way, a network is under control, and a carrier can effectively perform a function such as control, management, or charging on D2D communication; in addition, compared with the prior art, after the D2D connection is established, interference on a UE due to D2D communication can be further eliminated because the network can be effectively controlled.

Referring to FIG. 2, FIG. 2 is a flowchart of a method for establishing a D2D connection according to another embodiment of the present invention, which includes:
201: An evolved Node Base eNB receives a Bearer Setup Request or Bearer Modify Request message sent by a mobility management entity MME triggered by a device-to-device D2D server, where the Bearer Setup Request or Bearer Modify Request message includes an identity of a first device and an identity of a second device, and the Bearer Setup Request or Bearer Modify Request message instructs the first device and the second device to bear a service flow between the first device and the second device by using a D2D communication link.
202: The eNB binds the first device and the second device according to the identity of the first device and the identity of the second device, and establishes the D2D communication link between the first device and the second device.

In this embodiment, the first device and the second device are two devices in D2D communication.

Optionally, the method in this embodiment further includes:
sending, by the eNB, a D2D communication link establishment success result, so that the D2D server separately returns an application layer communication indication to the first device and the second device.

In this embodiment, the receiving, by the eNB, a Bearer Setup Request or Bearer Modify Request message sent by a mobility management entity MME triggered by a device-to-device D2D server includes:
receiving the Bearer Setup Request or Bearer Modify Request message sent by the mobility management entity MME triggered by the D2D server, where the Bearer Setup Request or Bearer Modify Request message carries the identity of the first device and the identity of the second device, so as to bind, through a public data network gateway PGW, a serving gateway SGW, and a mobility management entity MME that the first device belongs to and a PGW, an SGW, and an MME that the second device belongs to, the first device and the second device according to the identity of the first device and the identity of the second device, and establish the D2D communication link between the first device and the second device.

A beneficial effect of the method embodiment provided by the present invention is that: a D2D server triggers an eNB to establish a D2D communication link between a first device and a second device, so that a D2D connection can be established between the two devices. In this way, a network is under control, and a carrier can effectively perform a function such as control, management, or charging on D2D communication; in addition, compared with the prior art, after the D2D connection is established, interference on a UE due to D2D communication can be further eliminated because the network can be effectively controlled.

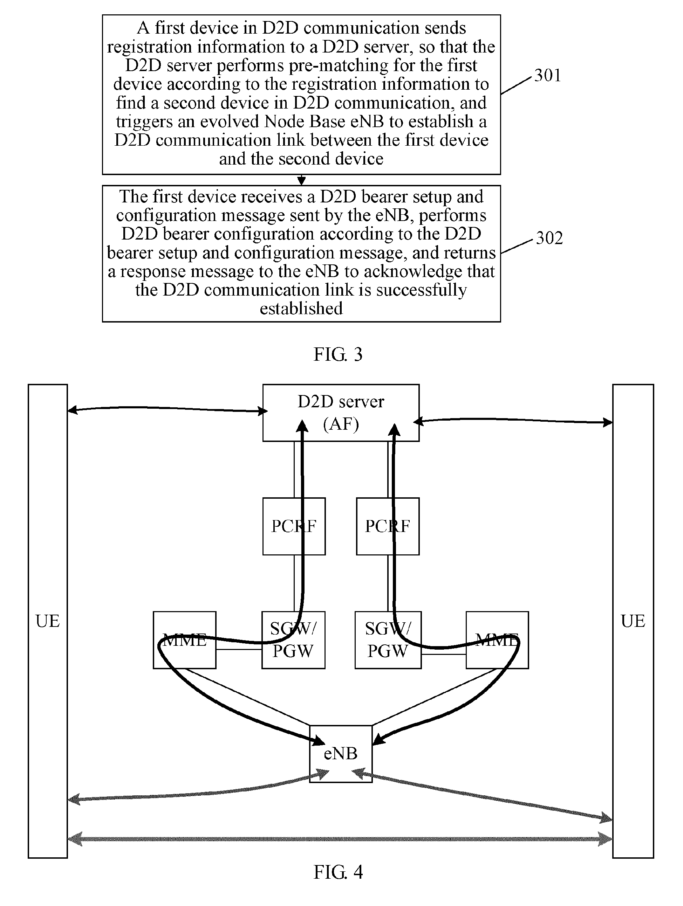

Referring to FIG. 3, FIG. 3 is a flowchart of a method for establishing a D2D connection according to another embodiment of the present invention, which includes:
301: A first device in D2D communication sends registration information to a D2D server, so that the D2D server performs pre-matching for the first device according to the registration information to find a second device in D2D communication and triggers an evolved Node Base eNB to establish a D2D communication link between the first device and the second device.
302: The first device receives a D2D bearer setup and configuration message sent by the eNB, performs D2D bearer configuration according to the D2D bearer setup and configuration message, and returns a response message to the eNB to acknowledge that the D2D communication link is successfully established.

In this embodiment, the registration information includes a D2D identity of the device, an application identity, and location information of the device.

Optionally, in this embodiment, after the sending, by a first device, registration information to a D2D server, the method further includes:
receiving, by the first device, registration information of the second device sent by the D2D server; and
pre-detecting, by the first device, the second device according to the registration information of the second device, so as to determine whether the second device is capable of communicating with the first device.

Optionally, in this embodiment, after learning, by the first device, a result that the eNB successfully establishes the D2D communication link, and after establishing the D2D communication link with the second device, the method further includes:
receiving, by the first device, a notification indication of returning to an application layer sent by the D2D server, and starting to perform D2D communication with the second device.

A beneficial effect of the method embodiment provided by the present invention is that: a D2D server triggers an eNB to establish a D2D communication link between a first device and a second device, so that a D2D connection can be established between the two devices. In this way, a network is under control, and a carrier can effectively perform a function such as control, management, or charging on D2D communication; in addition, compared with the prior art, after the D2D connection is established, interference on a UE due to D2D communication can be further eliminated because the network can be effectively controlled.

This embodiment provides a method for establishing a D2D connection. In this embodiment, a complete D2D solution is built based on this method, including an application layer, a network layer, and an access network. The D2D solution may support a carrier-oriented D2D operation mode, for example, the D2D solution may support release, control, interference control, charging of various D2D applications by a carrier. Referring to network architecture shown in FIG. 4, in this architecture, a D2D server is configured in a network for D2D information registration performed by a UE that uses D2D for communication. The D2D server in this embodiment may be a server that is newly added in the network, and may also be a function extension of an existing server in the network to implement the function of the D2D server, which is not specifically limited in this embodiment. According to the D2D information registered by one UE, the D2D server performs pre-matching to find the other UE that communicates with the one UE, and triggers the network through a PCRF to initiate a bearer setup or bearer modify process for the matched one UE and the other UE; the D2D server triggers, through the PCRF, a PGW, an SGW, and an MME in sequence, an eNB to finally set up a D2D bearer. An Rx interface exists between the D2D server and the PCRF, a Gx interface exists between the PCRF and the PGW, an S5/S8 interface exists between the PGW and the SGW, an S11 interface exists between the SGW and the MME, and an S1 interface exists between the MME and the eNB.

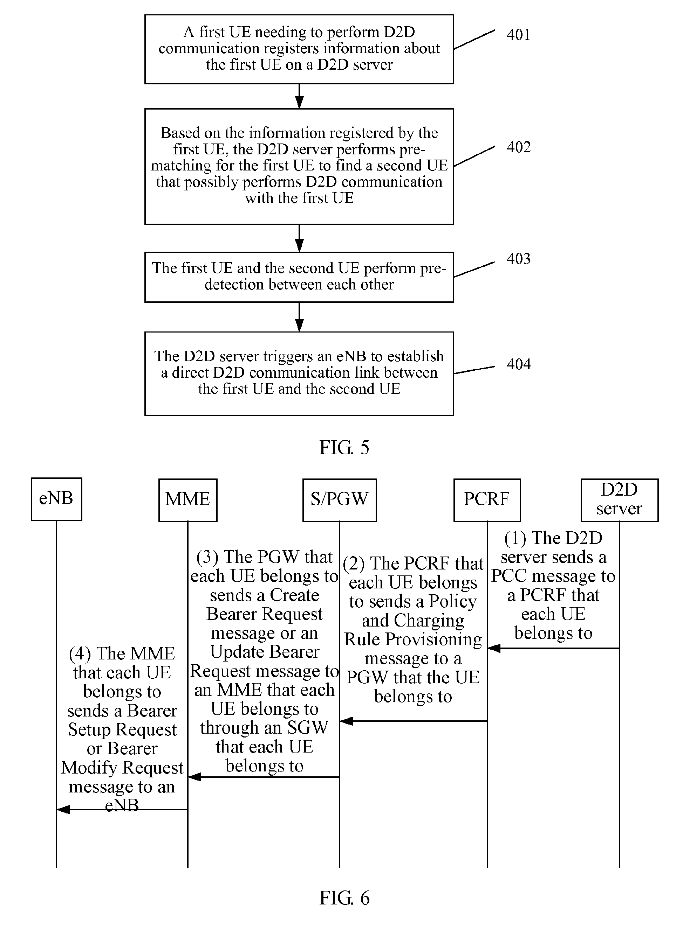

Referring to FIG. 5, a method for establishing a D2D connection according to an embodiment of the present invention specifically includes:
401: A first UE needing to perform D2D communication registers information about the first UE on a D2D server.

In this embodiment, a device needing to perform the D2D communication registers information about the device on the D2D server, so that the D2D server releases D2D information of the device in a network.

In this embodiment, optionally, if a UE is capable of listening for existence of a surrounding D2D UE and certain application-related information, for example, a D2D identity (D2D ID) of the UE, APP ID (Application IDentity, application identity), and the like, the UE listens for the surrounding D2D UE, so as to obtain information about the surrounding D2D UE, where the information about the surrounding D2D UE may be used by the D2D server for pre-matching. However, in actual application, some UEs do not have a listening function. For the UEs that do not have the listening function, a step of obtaining relevant information about a surrounding D2D UE does not need to be executed.

In this embodiment, the D2D server configured in the network is used for D2D information registration performed by a UE wishing to use D2D for communication, and the D2D server maintains the D2D information registered by all UEs. The registered information at least includes a D2D identity of a device, an application identity, and location information of the device.

In this embodiment, the D2D ID of a UE may be: (1) a newly defined identifier, where a unique identifier is allocated to each UE supporting D2D communication; or (2) an IMSI may be used as the D2D ID; or (3) an SIP URI (IP Uniform Resource Identifier, SIP identifier) may be reused; or (4) a specific identifier allocated by the network to the UE may be used, for example, an S-TMSI (S-TMSI S-Temporary Mobile Subscriber Identity, S temporary mobile subscriber identity), a P-TMSI (Packet Temporary Mobile Subscriber Identity, packet temporary mobile subscriber identity), or a GUTI (Globally Unique Temporary Identity, globally unique temporary subscriber identity). The location information of the UE includes an ID of a cell in which the UE is located, or if the UE is capable of obtaining GPS (Global Positioning System, global positioning system) information of the UE, the location information of the UE also includes a GPS of the UE.

Further, optionally, the registration information may further include at least one type of the following information, but is not limit to the following:
(1) an identity of a target UE: if the UE has a definite target UE for D2D communication, the UE may release the identity of the target UE to the D2D server;
(2) an IP address of the UE used for D2D communication;
(3) application-related information, for example, a name or an abstract of advertisement to be sent/received, a name of a game to be played, and other information required to establish a D2D link in the future, for example, a selected parameter such as a media type, a video encoding format, and QoS;
(4) information used for UE pre-detection, where this kind of information may assist the UE to pre-detect the target UE with which the UE will communicate, and determine whether quality of an air link to the UE may support D2D communication, thereby reducing possibility of a D2D bearer setup failure; and
(5) a list of pre-monitored UEs, where the list stores registration information of surrounding D2D UEs monitored by the UE; if the UE, before the pre-monitoring, is capable of finding available surrounding D2D UEs by using another mechanism, for example, listening for D2D broadcast information sent by other UEs, the UE may also release these UEs to the D2D server.

402: Based on the information registered by the first UE, the D2D server performs pre-matching for the first UE to find a second UE that possibly performs D2D communication with the first UE.

In this embodiment, based on the D2D information registered by the first UE, for example, application-related information and the first UE's location information, the D2D server performs pre-matching for the first UE to find a second UE that possibly performs D2D communication with the first UE. First of all, the second UE satisfying the condition should be close to the location of the first UE, for example, the second UE has a same cell ID; secondly, the second UE satisfying the condition should be interested in a same application, for example, the second UE selects a same game. Therefore, the performing pre-matching for the first device according to the registration information of the first device to find a second device includes: obtaining registration information of a pre-storing device according to the location information of the first device, where a distance between the pre-storing device and the first device is within a preset range; if application-related information stored in the pre-storing device for one device is consistent with the application-related information of the first device, determining that the one device in the pre-storing device is the pre-matched second device. In this embodiment, the pre-storing device may be one or more, which is not specifically limited in this embodiment.

Optionally, in this embodiment, if the UE has a definite target device for D2D communication, an identity of the target device is included in the registration information of the UE and is registered, together with the registration information of the UE, on the D2D server. Then, when the UE needs to perform D2D communication, the D2D server may directly selects the UE according to the registration information of the target device. If the UE provides a list of candidate D2D UEs, the D2D server only needs to perform pre-matching according to the UEs in the list. Therefore, optionally, the performing pre-matching for the first device according to the registration information of the first device to find a second device includes: performing pre-matching for the first device according to the identity of the second device to find the second device.

403: Perform pre-detection between the first UE and the second UE.

In this embodiment, the D2D server performs pre-matching for the first UE, so as to obtain the second UE that possibly performs D2D communication. For example, the D2D server performs pre-matching for the first UE to find that the second UE may serve as a candidate D2D UE of the first UE. Then, the D2D server initiates an acknowledgement process and sends the registration information of the pre-matched second UE to the first UE, and the first UE pre-detects the second UE according to the registration information of the second UE, so as to determine whether the second UE is capable of performing D2D communication with the first UE. The registration information carries the information used for pre-detection, a D2D ID, location information, and the like.

In this embodiment, after the D2D server performs pre-matching for the second UE, the D2D server may find multiple candidate D2D UEs. Here, the D2D server may select one or more candidate D2D UEs to sequentially or concurrently perform the acknowledgement process, which is not specifically limited in this embodiment.

In this embodiment, after the first UE receives a candidate D2D UE indication from the D2D server, if the message carries pre-detection information of the second UE, the first UE performs pre-detection by using the information and determines according to the pre-detection information whether D2D communication with the second UE can be performed. If the second UE cannot be listened for, it indicates that D2D communication with the second UE cannot be performed. If the message from the D2D server does not carry the pre-detection information of the second UE, or the current first UE does not support a pre-detection function, the first UE skips the step of pre-detection, and directly determines according to other information from the D2D server, for example, the location information, to estimate whether the second UE is capable of communicating with the first UE.

In this embodiment, after the first UE completes pre-detection, the first UE returns an acknowledgement message about the candidate D2D UE, for example, whether the second UE recommended by the D2D server is selectable. Further, the second UE may further update the D2D information of the second UE, such as a location, to the D2D server.

In this embodiment, if the first UE acknowledges with the D2D server that the second UE is capable of performing D2D communication, the D2D server optionally initiates a same acknowledgement process to the second UE, so as to request the second UE to acknowledge whether the first UE is selectable. A main objective is to prevent a possibility of a subsequent D2D bearer setup failure. For example, for a reason of interference, even if the first UE can detect the second UE, the second UE may not always detect the first UE. The specific acknowledgement process is the same as the acknowledgement process of the first UE and is not described in this embodiment again.

It needs to be noted that, step 403 is optional, and the D2D server may initiate step 404 according to a pre-matching result of the D2D server.

404: The D2D server triggers an eNB to establish a direct D2D communication link between the first UE and the second UE.

In this embodiment, referring to FIG. 6, that the D2D server triggers an eNB to establish a direct D2D communication link between the first UE and the second UE includes:
(1) The D2D server sends a PCC message to a PCRF that each UE belongs to.
   In this embodiment, the D2D server separately sends the PCC (Policy and Charging Control, policy and charging control) message to the PCRF that the first UE belongs to and the PCRF that the second UE belongs to, so as to trigger bearer setup/modify for the first UE and the second UE. The PCC message needs enhanced message content in the following, but is not limited to the enhanced content:
   (a)the D2D IDs of the two UEs; and
   (b) D2D Indication, used to indicate to the PCRF that the message is triggered for a UE in D2D communication.

   In this embodiment, the existence of the D2D IDs of the two UEs already indicates that the message is for a D2D bearer. Therefore, the message may not include D2D Indication information.
(2) The PCRF that each UE belongs to sends a Policy and Charging Rule Provisioning message to a PGW that the UE belongs to.
   In this embodiment, the PCRF that each UE belongs to sends the Policy and Charging Rule Provisioning (policy and charging rule provisioning) message to the PGW that the UE belongs to, and carries the D2D Indication, and the D2D IDs of the two UEs.
(3) The PGW that each UE belongs to sends a Create Bearer Request (Create Bearer Request) message or an Update Bearer Request (Update Bearer Request) message to an MME that each UE belongs to through an SGW that each UE belongs to.
   In this embodiment, the PGW that each UE belongs to sends the Create Bearer Request/Update Bearer Request to the MME that each UE belongs to through the SGW that each UE belongs to, and carries the D2D Indication, and the D2D IDs of the two UEs; the MME that each UE belongs to sends a Bearer Setup Request (Bearer Setup) message or Bearer Modify Request (Bearer Modify Request) message to the eNB, and carries the D2D Indication, and the D2D IDs of the two UEs. In addition, the bearer setup/modify message instructs the UE to bear a service flow that matches a TFT (Traffic Filter Template, traffic filter template) in the message by using a D2D link.
4) The MME that each UE belongs to sends the bearer setup message or bearer modify message to the eNB.

Using the process in this embodiment as an example, if the Bearer Setup Request or Bearer Modify Request message for UE1 received by the eNB from the MME carries the D2D Indication and the D2D IDs of the two UEs, the eNB knows that the message requires a D2D bearer to be set up for the current first UE and the second UE. However, the eNB is not capable of finding a context of the second UE according to the D2D ID of the second UE. At this time, the eNB delays processing the message, and waits for arrival of the Bearer Setup Request or Bearer Modify Request message that is for the second UE and carries the same D2D ID of the UE. In this embodiment, is the executing body is the second UE. When receiving the message for the second UE, the eNB binds the two UEs relevant to the two messages that carry the same D2D ID, so as to initiate a subsequent D2D link establishment process.

It needs to be noted that, in this embodiment, if the eNB is capable of recognizing the D2D ID of the second UE and finding the registration information corresponding to the second UE according to the D2D ID, for example, when a C-RNTI (Cell Radio Network Temporary Identifier, UE cell temporary identifier) is used for the D2D ID, the eNB is capable of recognizing the C-RNTI and finding the context corresponding to the UE according to the C-RNTI, then the eNB does not need to wait for the arrival of a second Bearer Setup Request or Bearer Modify Request message and may first bind the two D2D UEs.

In this embodiment, after the eNB finishes binding the D2D UEs, the eNB may control the two UEs to find each other, for example, configuring the first UE to send specific information on a certain physical resource, and configuring the second UE to listen for this information on the same physical resource. If the UE is capable of successfully listening for the information sent by the second UE, it indicates that the two UEs can perform D2D communication. Then, the eNB separately configures D2D link relevant information for the two UEs, for example, a D2D link ID and a relevant physical resource. After a D2D link is established, the two UEs send a specific handshake message to each other by using the D2D link, so as to determine that the D2D link works normally. After a D2D link establishment process ends, the eNB returns a D2D bearer setup result to the MME, for example, whether D2D bearer setup succeeds, and the MME, SGW, PGW, and PCRFreturns the message to the D2D server in sequence.

In this embodiment, after the D2D link controlled by the eNB is established, optionally, the D2D server returns a message to each UE to indicate whether the each UE may use D2D to start communication. In this embodiment, if a link is successfully established, an indication message for allowing the communication is returned to each UE; if the link fails to be established, an indication message for denying the communication is returned to each UE. In this embodiment, the UEs are capable of learning information about whether establishment of the D2D link is successful or not, and therefore, this step is optional.

In this embodiment, a D2D link establishment process includes four phases: (1) steps 201 and 202 are a process of network-based D2D information registration and pre-matching; (2) step 203 is a process of UE determining and pre-detection; (3) step 204 is a process of PCC-based bearer setup/modify and a process of establishing the D2D link controlled by the eNB.

A beneficial effect of the method embodiment provided by the present invention is that: a D2D server obtains registration information of a first device needing to perform D2D communication, the D2D server performs pre-matching for the first device according to the registration information of the first device to find a second device, and the D2D server triggers an eNB to establish a D2D communication link between the first device and the second device, so that a D2D connection can be established between the two devices. In this way, a network is under control, and a carrier can effectively perform a function such as control, management, or charging on D2D communication; in addition, compared with the prior art, after the D2D connection is established, interference on a UE due to D2D communication can be further eliminated because the network can be effectively controlled. In addition, when the D2D server finds the two devices that may perform D2D connection, the D2D server first triggers the two devices to perform pre-detection between each other, so as to further determine whether the communication is capable of being performed between the two devices. If the communication is capable of being performed, the D2D server triggers the eNB to establish a direct device-to-device connection between the two devices; otherwise, the D2D server may select another device to perform the pre-detection, so as to reduce network workload and improve network working efficiency.

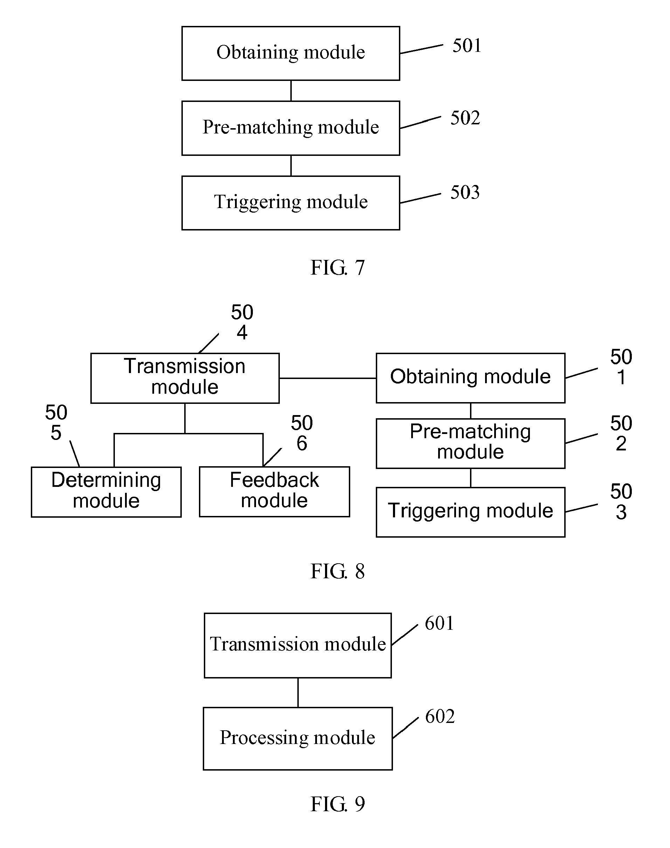

Referring to FIG. 7, this embodiment provides a D2D server, including: an obtaining module 501, a pre-matching module 502, and a triggering module 503.

The obtaining module 501 is configured to obtain registration information of a first device needing to perform D2D communication.

The pre-matching module 502 is configured to perform pre-matching for the first device, according to the registration information of the first device obtained by the obtaining module 501, to find a second device, where the first device and the second device are two devices in D2D communication.

The triggering module 503 is configured to trigger, after the pre-matching module 502 finds the second device, an eNB to establish a D2D communication link between the first device and the second device.

Referring to FIG. 8, the server in this embodiment further includes:
a transmission module 504, configured to receive registration information of a device needing to perform D2D communication, where the registration information of the device includes a D2D identity of the device, an application identity, and location information of the device.

Optionally, the registration information of the first device obtained by the obtaining module 501 further includes application-related information of the first device.

The pre-matching module 502 is specifically configured to obtain registration information of a pre-storing device according to location information of the first device, where a distance between the pre-storing device and the first device is within a preset range, and if application-related information stored in the pre-storing device for one device is consistent with the application-related information of the first device, determine that the one device in the pre-storing device is the pre-matched second device.

Optionally, the registration information of the first device obtained by the obtaining module 501 further includes an identity of the second device.

The pre-matching module 502 is specifically configured to perform pre-matching for the first device according to the identity of the second device to find the second device.

Optionally, in this embodiment, the transmission module 504 is further configured to send registration information of the second device to the first device, so that the first device pre-detects the second device according to the registration information sent by the transmission module 504.

The transmission module 504 is further configured to receive a pre-detection result of the first device.

Referring to FIG. 8, the server further includes:
a determining module 505, configured to determine, according to the pre-detection result of the first device received by the transmission module 504, whether the second device is capable of communicating with the first device.

Optionally, in this embodiment, the transmission module 504 is further configured to send the registration information of the first device to the second device, so that the second device pre-detects the first device according to the registration information of the first device.

The transmission module 504 is further configured to receive a pre-detection result of the second device.

The determining module 505 is further configured to determine, according to the pre-detection result received by the transmission module 504, whether the first device is capable of communicating with the second device.

In this embodiment, the triggering module 503 is specifically configured to:
separately send a Policy and Charging Control message to a policy and charging control function entity PCRF that the first device belongs to and a PCRF that the second device belongs to, where the Policy and Charging Control message includes an identity of the first device and the identity of the second device, so as to trigger the eNB, through a public data network gateway PGW, a serving gateway SGW, and a mobility management entity MME that the first device belongs to and a PGW, an SGW, and an MME that the second device belongs to, to bind the first device and the second device according to the identity of the first device and the identity of the second device, and establish the D2D communication link between the first device and the second device.

Optionally, referring to FIG. 8, in this embodiment:
the transmission module 504 is further configured to receive a D2D communication link establishment success result returned by the eNB;
the server further includes a feedback module 506, configured to separately return an application layer communication indication to the first device and the second device according to the result received by the transmission module 504.

Referring to FIG. 9, this embodiment provides an evolved Node Base eNB, where the base station includes a transmission module 601 and a processing module 602.

The transmission module 601 is configured to receive a Bearer Setup Request or Bearer Modify Request message sent by a mobility management entity MME triggered by a device-to-device D2D server, where the Bearer Setup Request or Bearer Modify Request message includes an identity of a first device and an identity of a second device, the Bearer Setup Request or Bearer Modify Request message instructs the first device and the second device to bear a service flow between the first device and the second device by using a D2D communication link, and the first device and the second device are two devices in D2D communication.

The processing module 602 is configured to bind the first device and the second device according to the identity of the first device and the identity of the second device, and establish the D2D communication link between the first device and the second device.

In this embodiment, the transmission module 601 is further configured to send a D2D communication link establishment success result, so that the D2D server separately returns an application layer communication indication to the first device and the second device.

In this embodiment, the transmission module 601 is specifically configured to:
receive the Bearer Setup Request or Bearer Modify Request message sent by the mobility management entity MME triggered by the D2D server, where the Bearer Setup Request or Bearer Modify Request message carries the identity of the first device and the identity of the second device, so as to bind, through a public data network gateway PGW, a serving gateway SGW, and a mobility management entity MME that the first device belongs to and a PGW, an SGW, and an MME that the second device belongs to, the first device and the second device according to the identity of the first device and the identity of the second device, and establish the D2D communication link between the first device and the second device.

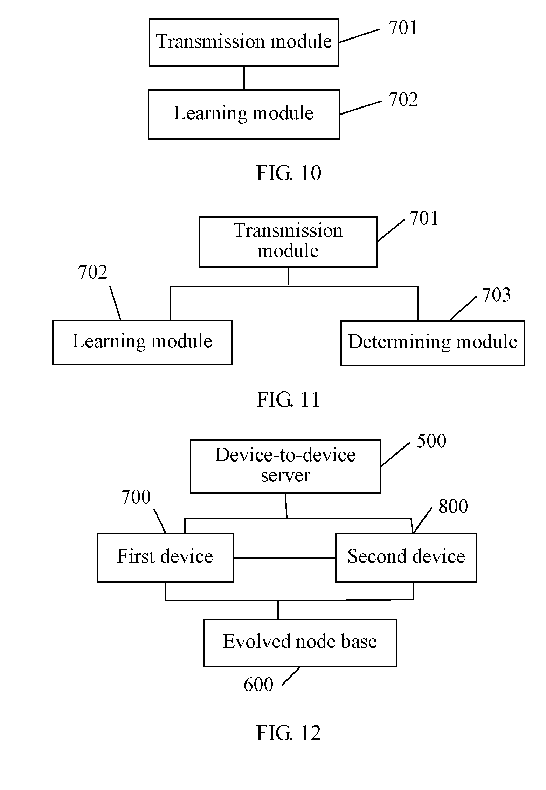

Referring to FIG. 10, an embodiment of the present invention provides a first device in D2D, where the device includes a sending module 701 and a learning module 702.

The transmission module 701 is configured to send registration information to a D2D server, so that the D2D server performs pre-matching for the first device according to the registration information to find a second device in D2D communication, and triggers an evolved Node Base eNB to establish a D2D communication link between the first device and the second device.

The learning module 702 is configured to receive a D2D bearer setup and configuration message sent by the eNB, perform D2D bearer configuration according to the D2D bearer setup and configuration message, and return a response message to the eNB to acknowledge that the D2D communication link is successfully established.

In this embodiment, the registration information sent by the transmission module 701 includes a D2D identity of the device, an application identity, and location information of the device.

Referring to FIG. 11, optionally, in this embodiment, the learning module 702 is further configured to receive registration information of the second device sent by the D2D server;

A determining module 703 is configured to pre-detect the second device according to the registration information of the second device, so as to determine whether the second device is capable of communicating with the first device.

In this embodiment, optionally, the learning module 702 is further configured to receive a notification indication of returning to an application layer sent by the D2D server, and start to perform D2D communication with the second device.

Referring to FIG. 12, this embodiment provides a system for establishing a device-to-device D2D connection, including: the foregoing D2D server 500, the foregoing evolved Node Base 600, and the foregoing first device 700 and second device 800 in D2D.

Further, the system in this embodiment further includes: a policy and charging control function entity PCRF, a public data network gateway PGW, a serving gateway SGW, and a mobility management entity MME that the first device belongs to, and a PCRF, a PGW, an SGW, and an MME that the second device belongs to;
the PCRF is configured to receive a Policy and Charging Control message sent by the D2D server, where the Policy and Charging Control message includes an identity of the first device and an identity of the second device, so as to trigger the eNB, through the PGW, the SGW, and the MME that the first device belongs to and the PGW, the SGW, and the MME that the second device belongs to, to bind the first device and the second device according to the identity of the first device and the identity of the second device, and establish a D2D communication link between the first device and the second device.

A beneficial effect of the apparatus embodiment provided by the present invention is that: a D2D server obtains registration information of a first device needing to perform D2D communication, the D2D server performs pre-matching for the first device according to the registration information of the first device to find a second device, and the D2D server triggers an eNB to establish a D2D communication link between the first device and the second device, so that a D2D connection can be established between the two devices. In this way, a network is under control, and a carrier can effectively perform a function such as control, management, or charging on D2D communication; in addition, compared with the prior art, after the D2D connection is established, interference on a UE due to D2D communication can be further eliminated because the network can be effectively controlled.

The D2D server, the eNB, the first device, and the system according to this embodiment may specifically have a same conception as the method embodiments. For details of a specific implementation process, reference may be made to the method embodiments, and the detailed implementation process is not described herein again.

It should be noted that, in the foregoing D2D server embodiments, the included units are divided based on only function logic, but the present invention is not limited to the foregoing division, as long as corresponding functions can be implemented; in addition, a specific name of each functional unit is only for easy differentiation from each other, and is not intended to limit the protection scope of the present invention.

In addition, a person of ordinary skill in the art may understand that all or a part of the steps in the foregoing method embodiments may be performed by a program instructing relevant hardware. The program may be stored in a computer readable storage medium. The storage medium may be a read-only memory, a magnetic disk, or an optical disc.

The foregoing descriptions are merely exemplary embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a device-to-device D2D connection, wherein the method comprises:
Obtaining, by a device-to-device D2D server, registration information of a first device needing to perform D2D communication;
performing pre-matching, by the D2D server, for the first device according to the registration information of the first device to find a second device, wherein the first device and the second device are two devices in D2D communication; and
triggering, by the D2D server, an evolved Node Base eNB to establish a D2D communication link between the first device and the second device.

2. The method according to claim 1, wherein the method further comprises:
receiving, by the D2D server, registration information of a device needing to perform D2D communication, wherein the registration information of the device comprises a D2D identity of the device, an application identity, and location information of the device.

3. The method according to claim 1 or 2, wherein if the registration information of the first device further comprises application-related information of the first device, the performing pre-matching for the first device according to the registration information of the first device to find a second device comprises:
obtaining registration information of a pre-storing device according to location information of the first device, wherein a distance between the pre-storing device and the first device is within a preset range; and
if application-related information stored in the pre-storing device for one device is consistent with the application-related information of the first device, determining that the one device in the pre-storing device is the pre-matched second device.

4. The method according to claim 1 or 2, wherein if the registration information of the first device obtained by the device-to-device D2D server further comprises an identity of the second device, the performing pre-matching for the first device according to the registration information of the first device to find a second device comprises:
performing pre-matching for the first device according to the identity of the second device to find the second device.

5. The method according to any one of claims 1 to 4, after the performing pre-matching for the first device according to the registration information of the first device to find a second device, further comprising:
sending, by the D2D server, registration information of the second device to the first device, so that the first device pre-detects the second device according to the registration information of the second device; and
receiving, by the D2D server, a pre-detection result of the first device, and determining, according to the pre-detection result, whether the second device is capable of communicating with the first device.

6. The method according to claim 5, wherein if the D2D server receives a pre-detection success result of the first device, after determining that the second device is capable of communicating with the first device, further comprises:
sending, by the D2D server, the registration information of the first device to the second device, so that the second device pre-detects the first device according to the registration information of the first device; and
receiving, by the D2D server, a pre-detection result of the second device, and determining whether the first device is capable of communicating with the second device.

7. The method according to any one of claims 1 to 6, wherein the triggering, by the D2D server, an evolved Node Base eNB to establish a D2D communication link between the first device and the second device comprises:
separately sending, by the D2D server, a Policy and Charging Control message to a policy and charging control function entity PCRF that the first device belongs to and a PCRF that the second device belongs to, wherein the Policy and Charging Control message comprises an identity of the first device and the identity of the second device, so as to trigger the eNB, through a public data network gateway PGW, a serving gateway SGW, and a mobility management entity MME that the first device belongs to and a PGW, an SGW, and an MME that the second device belongs to, to bind the first device and the second device according to the identity of the first device and the identity of the second device, and establish the D2D communication link between the first device and the second device.

8. The method according to any one of claims 1 to 7, after the triggering an eNB to establish a D2D communication link between the first device and the second device, further comprising:
receiving, by the D2D server, a D2D communication link establishment success result returned by the eNB, and separately returning an application layer communication indication to the first device and the second device.

9. A method for establishing a device-to-device D2D connection, wherein the method comprises:
Receiving, by an evolved Node Base eNB, a Bearer Setup Request or Bearer Modify Request message sent by a mobility management entity MME triggered by a device-to-device D2D server, wherein the Bearer Setup Request or Bearer Modify Request message comprises an identity of a first device and an identity of a second device, the bearer setup or bearer modify message instructs the first device and the second device to bear a service flow between the first device and the second device by using a D2D communication link, and the first device and the second device are two devices in D2D communication; and
Binding, by the eNB, the first device and the second device according to the identity of the first device and the identity of the second device, and establishing the D2D communication link between the first device and the second device.

10. The method according to claim 9, wherein the method further comprises:
sending, by the eNB, a D2D communication link establishment success result, so that the D2D server separately returns an application layer communication indication to the first device and the second device.

11. The method according to claim 9, wherein the receiving, by an eNB, a bearer setup or modify request message sent by a mobility management entity MME triggered by a device-to-device D2D server comprises:
receiving the bearer setup or modify request message sent by the mobility management entity MME triggered by the D2D server, wherein the bearer setup or modify request message carries the identity of the first device and the identity of the second device, so as to bind, through a public data network gateway PGW, a serving gateway SGW, and a mobility management entity MME that the first device belongs to and a PGW, an SGW, and an MME that the second device belongs to, the first device and the second device according to the identity of the first device and the identity of the second device, and establish the D2D communication link between the first device and the second device.

12. A method for establishing a device-to-device D2D connection, wherein the method comprises:
Sending, by a first device in D2D communication, registration information to a D2D server, so that the D2D server performs pre-matching for the first device according to the registration information to find a second device in D2D communication, and triggers an evolved Node Base eNB to establish a D2D communication link between the first device and the second device; and
Receiving, by the first device, a D2D bearer setup and configuration message sent by the eNB, performing D2D bearer configuration according to the D2D bearer setup and configuration message, and returning a response message to the eNB to acknowledge that the D2D communication link is successfully established.

13. The method according to claim 12, wherein the registration information comprises a D2D identity of a device, an application identity, and location information of the device.

14. The method according to claim 12 or 13, after the sending, by a first device in D2D communication, registration information to a D2D server, further comprising:
receiving, by the first device, registration information of the second device sent by the D2D server; and
pre-detecting, by the first device, the second device according to the registration information of the second device, so as to determine whether the second device is capable of communicating with the first device.

15. The method according to any one of claims 12 to 14, wherein the method further comprises:
receiving, by the first device, a notification indication of returning to an application layer sent by the D2D server, and starting to perform D2D communication with the second device.

16. A device-to-device D2D server, wherein the server comprises:
an obtaining module, configured to obtain registration information of a first device needing to perform D2D communication;
a pre-matching module, configured to perform pre-matching for the first device, according to the registration information of the first device obtained by the obtaining module, to find a second device, wherein the first device and the second device are two devices in D2D communication; and
a triggering module, configured to trigger, after the pre-matching module finds the second device, an evolved Node Base eNB to establish a D2D communication link between the first device and the second device.

17. The server according to claim 15, wherein the server further comprises:
a transmission module, configured to receive registration information of a device needing to perform D2D communication, wherein the registration information of the device comprises a D2D identity of the device, an application identity, and location information of the device.

18. The server according to claim 16 or 17, wherein the registration information of the first device obtained by the obtaining module further comprises application-related information of the first device; and
the pre-matching module is specifically configured to obtain registration information of a pre-storing device according to location information of the first device, wherein a distance between the pre-storing device and the first device is within a preset range, and if application-related information stored in the pre-storing device for one device is consistent with the application-related information of the first device, determine that the one device in the pre-storing device is the pre-matched second device.

19. The server according to claim 16 or 17, wherein,
the registration information of the first device obtained by the obtaining module further comprises an identity of the second device; and
the pre-matching module is specifically configured to perform pre-matching for the first device according to the identity of the second device to find the second device.

20. The server according to any one of claims 16 to 19, wherein,
the transmission module is further configured to send registration information of the second device to the first device, so that the first device pre-detects the second device according to the registration information sent by the transmission module; and
the transmission module is further configured to receive a pre-detection result of the first device;
the server further comprises:
a determining module, configured to determine, according to the pre-detection result of the first device received by the transmission module, whether the second device is capable of communicating with the first device.

21. The server according to claim 20, wherein,
the transmission module is further configured to send the registration information of the first device to the second device, so that the second device pre-detects the first device according to the registration information of the first device;
the transmission module is further configured to receive a pre-detection result of the second device; and
the determining module is further configured to determine, according to the pre-detection result received by the transmission module, whether the first device is capable of communicating with the second device.

22. The server according to any one of claims 16 to 21, wherein,
the triggering module is specifically configured to separately send a Policy and Charging Control message to a policy and charging control function entity PCRF that the first device belongs to and a PCRF that the second device belongs to, wherein the Policy and Charging Control message comprises an identity of the first device and the identity of the second device, so as to trigger the eNB, through a public data network gateway PGW, a serving gateway SGW, and a mobility management entity MME that the first device belongs to and a PGW, an SGW, and an MME that the second device belongs to, to bind the first device and the second device according to the identity of the first device and the identity of the second device, and establish the D2D communication link between the first device and the second device.

23. The server according to any one of claims 16 to 22, wherein,
the transmission module is further configured to receive a D2D communication link establishment success result returned by the eNB;
the server further comprises:
a feedback module, configured to separately return an application layer communication indication to the first device and the second device according to the result received by the transmission module.

24. An evolved Node Base eNB, where the base station comprises:
a transmission module, configured to receive a Bearer Setup Request or Bearer Modify Request message sent by a mobility management entity MME triggered by a device-to-device D2D server, wherein the Bearer Setup Request or Bearer Modify Request message comprises an identity of a first device and an identity of a second device, the Bearer Setup Request or Bearer Modify Request message instructs the first device and the second device to bear a service flow between the first device and the second device by using a D2D communication link, and the first device and the second device are two devices in D2D communication; and
a processing module, configured to bind the first device and the second device according to the identity of the first device and the identity of the second device, and establish the D2D communication link between the first device and the second device.

25. The base station according to claim 24, wherein the transmission module is further configured to send a D2D communication link establishment success result, so that the D2D server separately returns an application layer communication indication to the first device and the second device.

26. The base station according to claim 24, wherein the transmission module is specifically configured to:
receive the Bearer Setup Request or Bearer Modify Request message sent by the mobility management entity MME triggered by the D2D server, wherein the Bearer Setup Request or Bearer Modify Request message carries the identity of the first device and the identity of the second device, so as to bind, through a public data network gateway PGW, a serving gateway SGW, and a mobility management entity MME that the first device belongs to and a PGW, an SGW, and an MME that the second device belongs to, the first device and the second device according to the identity of the first device and the identity of the second device, and establish the D2D communication link between the first device and the second device.

27. A first device in D2D, wherein the device comprises:
a transmission module, configured to send registration information to a D2D server, so that the D2D server performs pre-matching for the first device according to the registration information to find a second device in D2D communication, and triggers an evolved Node Base eNB to establish a D2D communication link between the first device and the second device; and
a learning module, configured to receive a D2D bearer setup and configuration message sent by the eNB, perform D2D bearer configuration according to the D2D bearer setup and configuration message, and return a response message to the eNB to acknowledge that the D2D communication link is successfully established.

28. The device according to claim 27, wherein the registration information sent by the transmission module comprises a D2D identity of the device, an application identity, and location information of the device.

29. The device according to claim 27 or 28, wherein:
the transmission module is further configured to receive registration information of the second device sent by the D2D server; and
a determining module is configured to pre-detect the second device according to the registration information of the second device received by the transmission module, so as to determine whether the second device is capable of communicating with the first device.

30. The device according to any one of claims 27 to 29, wherein the transmission module is further configured to receive a notification indication of returning to an application layer sent by the D2D server, and start to perform D2D communication with the second device.

31. A system for establishing a device-to-device D2D connection, comprising: the D2D server according to any one of claims 12 to 19, the evolved Node Base eNB according to any one of claims 20 to 22, and the first device and second device in the D2D according to any one of claims 27 to 30.

32. The system according to claim 31, wherein the system further comprises: a policy and charging control function entity PCRF, a public data network gateway PGW, a serving gateway SGW, and a mobility management entity MME that the first device belongs to, and a PCRF, a PGW, an SGW, and an MME that the second device belongs to; wherein
the PCRF is configured to receive a Policy and Charging Control message sent by the D2D server, wherein the Policy and Charging Control message comprises an identity of the first device and an identity of the second device, so as to trigger the eNB, through the PGW, the SGW, and the MME that the first device belongs to and the PGW, the SGW, and the MME that the second device belongs to, to bind the first device and the second device according to the identity of the first device and the identity of the second device, and establish a D2D communication link between the first device and the second device.
